(19) Europäisches Patentamt
European Patent Office
Office européen des brevets

(11) EP 0 932 637 B1

(12) **EUROPÄISCHE PATENTSCHRIFT**

(45) Veröffentlichungstag und Bekanntmachung des Hinweises auf die Patenterteilung:
**14.01.2004 Patentblatt 2004/03**

(21) Anmeldenummer: **98948770.7**

(22) Anmeldetag: **11.08.1998**

(51) Int Cl.⁷: **C08G 75/00**, C09D 101/08, C23C 22/05

(86) Internationale Anmeldenummer:
**PCT/DE1998/002314**

(87) Internationale Veröffentlichungsnummer:
**WO 1999/009088 (25.02.1999 Gazette 1999/08)**

(54) **POLYMERE METALLBESCHICHTUNG**
POLYMERIC METAL COATING
REVETEMENT METALLIQUE POLYMERE

(84) Benannte Vertragsstaaten:
**DE ES FR GB IT**

(30) Priorität: **14.08.1997 DE 19735368**

(43) Veröffentlichungstag der Anmeldung:
**04.08.1999 Patentblatt 1999/31**

(73) Patentinhaber: **UNIVERSITÄT KARLSRUHE**
**76128 Karlsruhe (DE)**

(72) Erfinder:
- **WENZ, Gerhard**
  **D-76275 Ettlingen (DE)**
- **PETRI, Denise Freitas**
  **D-76187 Karlsruhe (DE)**
- **CHOI, Soo Whan**
  **D-76185 Karlsruhe (DE)**

(74) Vertreter: **Rucker, Ernst, Dr. Dipl.-Chem.**
**Müller-Boré & Partner**
**Patentanwälte**
**Grafinger Strasse 2**
**81671 München (DE)**

(56) Entgegenhaltungen:
**DE-A- 2 260 074**
**DE-A- 2 523 793**
**DE-A- 3 710 569**
**US-A- 5 248 772**

EP 0 932 637 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft die Verwendung polymerer Thiosulfate zur Beschichtung von Oberflächen.

Monomere Alkylthiosulfate ($R-S-SO_3^-$) sind als Bunte-Salze bekannt [H. Distler, *Angew. Chem.* **1967**, *79*, 520-529]. Sie werden im allgemeinen durch Reaktion von Alkylbromiden mit Natriumthiosulfat erhalten. Die Einsatzgebiete solcher Bunte-Salze sind sehr vielfältig. So werden sie z.B. als Insektizide oder Fungizide, sowie als Strahlenschutzmittel und Farbenzusatzmittel eingesetzt. Bislang sind mit Ausnahme von Polystyrolderivaten [Tabushi et al *J. Chem. Soc. Japan, Ind. Chem. Sect.* **1964**, *67*, 478] keine polymeren Thiosulfate literaturbekannt. Ebenso sind keine Anwendungen von organischen Thiosulfaten zur Erzeugung ultradünner Schichten bekannt.

Zur Erzeugung von ultradünnen Schichten auf festen hydrophoben Trägern wird die Langmuir-Blodgett-Technik [F. Embs, D. Funhoff, A. Laschewsky, U. Licht, H. Ohst, W. Prass, H. Ringsdorf, G. Wegner, R. Wehrmann *Adv. Mater.* **1991**, *3*, 25-31] angewendet. Dieses Verfahren ist jedoch ausgesprochen teuer, und nur für kleine, planare Flächen geeignet. Außerdem ist dieses Vorgehen nicht für die Beschichtung von komplexeren Strukturen, wie z.B. Hohlkörpern, geeignet. Auch das Aufziehen von Polyelektrolytschichten auf geladenen Trägern [G. Decher, J. Schmitt, L. Heiliger, H.-U. Siegmund, G. Patent, Application Number P 4333107.6; G. Decher, J.-D. Hong *Makromol. Chem., Macromol. Symp.* **1991**, *46*, 321-327] ist bekannt, was jedoch ausschließlich auf die Beschichtung geladener Oberflächen beschränkt ist. Weiterhin ist die chemische Modifizierung reaktiver Träger und die Chemisorption von Alkylthiolen auf Metalloberflächen bekannt [L.H. Dubois, R.G. Nuzzo, *Annu. Rev. Phys. Chem.* **1992**, *43*, 437-463; R.G. Nuzzo, F. A. Fusco, D.L. Allara, J. *Am. Chem. Soc.* 1987, *109,* 2358-2368]. Die bekannte Chemisorption von monomeren Thiolen, z.B. Alkylthiolen, auf Edelmetall- oder Halbedelmetalloberflächen hat den Vorteil, daß dieser Vorgang sehr selektiv ist und damit eine Kontamination der Schichten durch Verunreinigungen weitgehend ausgeschlossen werden kann. Mit Alkylthiolen können zum Beispiel auf Gold 2-dimensionale kristalline Monoschichten auf einfache Weise aus Lösung aufgebracht werden. Dabei entstehen hydrophobierte Goldoberflächen. Mit Alkylthiolen mit hydrophilen Endgruppen z.B. $\alpha$-$\omega$-Hydroxyalkylthiolen, kann auch eine hydrophile Beschichtung erzielt werden [ R.G. Nuzzo, L.H. Dubois, D.L. Allara, *J. Am. Chem. Soc.* **1990**, *112,* 558-569]. Ein wesentlicher Nachteil der beschriebenen Alkylthiole ist deren geringe Löslichkeit in Wasser. Deshalb erfordern sie den Einsatz organischer Lösungsmittel, um für die Beschichtung von Metalloberflächen eingesetzt werden zu können. Weiterhin nachteilig ist, daß die mittels bekannter Alkylthiole erzeugten Schichten kristallin sind. Diese kristalline Form der Beschichtung hat mehrere Nachteile. Zum einen bilden kristalline Schichten eine sogenannte Domänenstruktur aus. Dies kann zu unvollständiger Bedeckung der Beschichtung an den Grenzflächen dieser Domänen führen. Ein weiterer Nachteil ist, daß es bei Mischungen verschiedener Alkylthiole zur Phasenseparation der Monoschichten auf Metalloberflächen kommen kann. Durch eine solche Entmischung der kristallinen Schicht werden sowohl die mechanischen, wie auch die optischen Eigenschaften einer solcher Beschichtung deutlich verschlechtert. Darüberhinaus besitzen die bekannten monomeren Alkylthiole einen ausgesprochen unangenehmen Geruch und sind zudem meistens toxisch, was einen weiteren Nachteil für den gewerblichen Einsatz dieser Verbindungen darstellt.

Neben den niedermolekularen Thiolen wurden auch Thiolderivate von oligomeren Kohlenhydraten, z.B. Cyclodextrinthiole, an Gold chemisorbiert [G. Nelles, M. Weisser, R. Back, P. Wohlfart, G. Wenz, S. Mittler-Neher, J. *Am. Chem. Soc.* **1996**, *118,* 5039-5046]. Auch hier entstehen hydrophile Beschichtungen mit Schichtdicken von wenigen Nanometern. Nachteilig bei oligomeren und polymeren Thiolderivaten ist jedoch deren Tendenz unter Bildung von S - S Bindungen in Lösung zu vernetzen. Außerdem ist die Synthese der bisher beschriebenen Cyclodextrinthiole sehr teuer und aufwendig.

In der WO 88-05473 wird außerdem die Beschichtung von Metalloberflächen mittels Chemisorption von mono- oder polyfunktionellen Molekülen beschrieben. Jedoch ist keine der beschriebenen funktionellen Gruppen eine Thiol- oder Thiosulfatgruppe. Die dort beschriebenen Polymere enthalten vielmehr Halogenalkylgrupppen oder ungesättigte Gruppen. Bei einer möglichen Nutzung dieses Verfahrens wird der Einsatz organischer Lösungsmittel empfohlen.

Ferner beschreibt DE-OS-25 23 793 ein Produkt zu Separationszwecken, lonenaustauschzwecken oder als Ausgangsmaterial zur Herstellung verschiedener Derivate, unter anderem zu Separationszwecken für die Adsorption oder Immobilisierung verschiedener spezifischer biochemisch interessanter Stoffe, sowie Enzymen, Inhibitoren oder Partikeln, zur Durchführung von Redox-Reaktionen oder dergleichen wie auch aus deren Derivaten bestehnder Produkte, dadurch gekennzeichnet, daß sie aus einem in Wasser nicht löslichen, hydroxyloder aminogruppenhaltigen Polymer bestehen, das mit organischen Seitenketten von je einer oder mehreren Thiosulfatgruppen ($-S_2O_3^-$-Gruppen) enthaltenden Seitengruppen oder den Derivaten derartiger Gruppen, substituiert ist.

Der vorliegenden Erfindung liegt somit die Aufgabe zugrunde, Verbindungen bereitzustellen, welche keinen unangenehmen Geruch, niedrige Toxizität und gegenüber den bislang bekannten Verbindungen eine erheblich verbesserte Löslichkeit in wässerigen Medien aufweisen sollen und welche amorphe, hydrophile und dichte Schichten mit hoher mechanischer Beanspruchbarkeit und chemischer Beständigkeit auf Metallen bilden sollen.

Darüberhinaus sollen derartige Verbindungen die Beschichtung von Metalloberflächen erheblich umweltfreundlicher, billiger und einfacher gestalten.

Diese Aufgabe wird durch die in den Ansprüchen gekennzeichneten Ausführungsformen gelöst.

Insbesondere wird die Verwendung von löslichen polymeren Thiosulfaten mit Struktureinheiten der allgemeinen Formeln I und/oder II bereitgestellt,

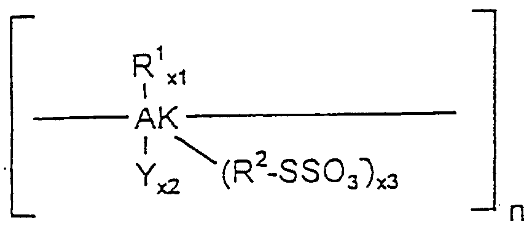

I

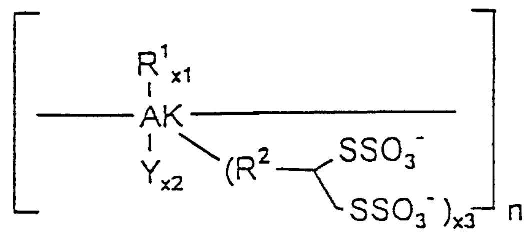

II

worin AK eine Anhydro-Kohlenhydrateinheit bedeutet, der Rest $R^1$ ein Wasserstoffatom, einen gerad- oder verzweigtkettigen ($C_1$-$C_{30}$)-Alkylrest, einen gerad- oder verzweigtkettigen ($C_1$-$C_{30}$)-Alkanoylrest, einen gerad- oder verzweigtkettigen ($C_2$-$C_{30}$)-Alkylenoxyalkylrest, einen gerad- oder verzweigtkettigen ($C_2$-$C_{30}$)-Alkylenoxoalkylrest, einen ($C_2$-$C_{30}$)-Alkenylrest, einen ($C_2$-$C_{30}$)-Alkenoylrest, einen ($C_2$-$C_{30}$)-Alkinylrest, einen gerad- oder verzweigtkettigen ($C_5$-$C_{30}$)-Cycloalkylrest, einen substituierten oder unsubstituierten ($C_5$-$C_{30}$)-Arylrest, der ein oder mehrere Heteroatome aufweisen kann, oder einen substituierten oder unsubstituierten ($C_5$-$C_{30}$)-Aryloylrest, der ein oder mehrere Heteroatome aufweisen kann, bedeutet, wobei der Rest $R^1$ jeweils an ein Sauerstoffatom der Anhydro-Kohlenhydrateinheit gebunden ist und der Substitutionsgrad x1 0,1,2 oder 3 ist, der Rest $R^2$ einen bivalenten Spacer, ausgewählt aus einem substituierten oder unsubstituierten ($C_1$-$C_{30}$)-Alkylenrest, einem substituierten oder unsubstituierten ($C_1$-$C_{30}$)-Hydroxyalkylenrest, einem substituierten oder unsubstituierten ($C_1$-$C_{30}$)-Oxoalkylenrest, einem substituierten oder unsubstituierten ($C_2$-$C_{30}$)-Alkylenoxoalkylenrest, einem substituierten oder unsubstituierten ($C_2$-$C_{30}$)-Alkylenoxyalkylenrest, einem substituierten oder unsubstituierten ($C_2$-$C_{30}$)-Hydroxyalkylenoxyalkylenrest, einem substituierten oder unsubstituierten ($C_2$-$C_{30}$)-Alkylenoxyhydroxyalkylenrest, einem ($C_2$-$C_{30}$)-Alkenylrest, einem ($C_2$-$C_{30}$)-Alkinylrest, einem substituierten oder unsubstituierten ($C_5$-$C_{30}$)-Cycloalkylenrest oder einem substituierten oder unsubstituierten ($C_5$-$C_{30}$) -Arylenrest, der einen oder mehrere Heteroatome aufweisen kann, bedeutet, wobei der Rest $R^2$ jeweils an ein Sauerstoffatom der Anhydro-Kohlenhydrateinheit gebunden ist und der Substitutionsgrad x3 0,1,2 oder 3 ist, Y eine funktionelle Gruppe, ausgewählt aus einer Nitrat-, einer Aminodesoxy-, einer substituierten oder unsubstituierten Amino-, einer Carboxyalkyl-, einer Hydroxyalkyl-, einer Sulfat-, einer Sulfonat-, einer Carbonat- oder einer Xanthogenatgruppe, bedeutet, wobei der Substitutionsgrad x2 0,1,2 oder 3 ist, mit den Maßgaben, daß die Summe von x1, x2 und x3 $\leq 3$ ist und x3 nicht über die gesamte Polymerkette gleich 0 ist, und n einen Polymerisationsgrad zwischen 1 und 10 000 bedeutet, wobei die Verknüpfung der Anhydro-Kohlenhydrateinheiten linear, zyklisch, verzweigt oder vernetzt ist, zur Beschichtung von Substratoberflächen, wobei die Substrate aus Metallen ausgewählt sind, deren Oberflächen durch Eintauchen in wässerige und/oder alkoholische Lösungen von mindestens einem der polymeren Thiosulfate beschichtet werden.

Bei den vorgenannten Bereichsangaben für die Kohlenstoffzahl der jeweiligen Reste sind nur solche Kohlenstoffe gemeint, die nicht durch eine Doppelbindung mit Sauerstoff verbunden sind.

In einer bevorzugten Ausführungsform der vorliegenden Erfindung ist die Anhydro-Kohlenhydrateinheit AK eine Anhydroglukose-Einheit.

im Fall, daß die Reste $R^1$ bzw. $R^2$ einen substituierten Aryl- bzw. Aryloylrest bedeuten, können diese Reste ferner beispielsweise mit einem oder mehreren Halogenatomen, Alkylresten, Cycloalkylresten, Mono-, Di- oder Trialkylsilylresten, Mono-, Di- oder Triarylsilylresten oder Trifluormethylgruppen substituiert sein.

Die erfindungsgemäß verwendeten polymeren Thiosulfate weisen gegenüber anderen polymeren Schwefelverbindungen eine sehr gute Löslichkeit in polaren Lösungsmitteln, insbesondere in Wasser auf. Darüberhinaus vernetzen die erfindungsgemäßen Verbindungen in Lösung nicht. Außerdem sind diese polymeren Thiosulfate praktisch geruchlos und als Polymere nicht hautdurchgängig.

In dem Verfahren zur Herstellung der erfindungsgemäß verwendeten polymeren Thiosulfate werden Tetrathionate durch eine polymeranaloge Umsetzung an ungesättigte Polymere gebunden. in einer polymeranalogen Umsetzung erfolgt dabei die Addition von Alkali- bzw. Erdalkalitetrathionaten an ungesättigte Polymere. Die ungesättigten Polymere können beispielsweise Alkenyl- oder Alkinyl-Ether oder -Ester von Polyolen sein. Mehr bevorzugt sind die ungesättigten Polymere Alkenyl- oder Alkinyl-Ether oder -Ester von Polysacchariden.

Vorzugsweise ist das Polysaccharid ausgewählt aus Cellulose, Stärke, Amylose, Amylopektin, Xanthan, Guaran, Dextran, Cyclodextrinen, Pullutan, Carrageen und andere linearen, zyklischen oder verzweigten Polyglucanen, Polygalaktanen, Polymannanen sowie deren Copolymeren. Besonders bevorzugt ist das Polysaccharid (3-Allyloxy-2-hydroxypropyl)-cellulose oder (3-Allyloxy-2-hydroxypropyl)-carboxymethylcellulose.

Die polymeranaloge Addition wird in wässeriger Lösung durchgeführt, wobei die Umsetzung bei 60-130°C, vorzugsweise 70-100°C, durchgeführt wird.

Durch Addition von Tetrathionaten an ungesättigte Polymere können somit wasserlösliche polymere Thiosulfate hergestellt werden. Dabei entstehen Polymere, die zumindestens teilweise Struktureinheiten der vorgenannten Formeln I und/oder II enthalten (polymere Bunte-Salze). Beispielsweise können durch Addition von Tetrathionat an Allyloxy-hydroxypropylcellulose, das aus Cellulose und Allylglycidylether (AGE) hergestellt wird, Bis-Thiosulfate-Einheiten gemäß der Formel II synthetisiert werden, wie nachstehend in Gl: 1 dargestellt ist.

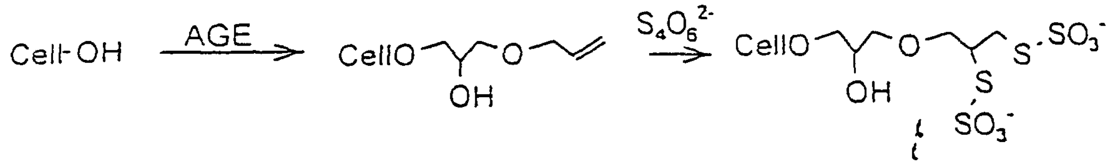


(1)

Die Addition von Teträthionat an die Doppelbindungen läuft ohne Katalysator in wässeriger Lösung ab. Die Herstellung anderer polymerer Alkylthiosulfate erfolgt analog. So können gemäß dem gezeigten Herstellungsverfahren beispielsweise die Allylderivate des Cyclodextrins und der Cellulose in die Thiosulfatderivate überführt werden. Die Allylderivate sind auf einfache Weise durch Addition von Allylglycidylether an Cyclodextrin bzw. Cellulose zugänglich.

Das Verfahren zur Herstellung von polymeren Alkylthiosulfaten zeichnet sich durch große Einfachheit und hohe Ausbeute aus. Die Produkte dieses Herstellungsverfahrens sind sehr gut wasserlöslich, desweiteren findet keine Vernetzung der Polymere durch S-S Brücken statt.

Die sich aus diesen Eigenschaften ergebenden vorteile für den möglichen Einsatz und das mögliche Anwendungsgebiet solcher Verbindungen sind vielfältig. So können beispielsweise fest haftende Beschichtungen von nur einigen Nanometern Dicke auf Metalle, insbesonder Legierungen, Edelmetalle wie Gold und Silber und auf Halbedelmetalle wie zum Beispiel Kupfer, aufgebracht werden. Die Herstellung solcher Schichten kann mit den erfindungsgemäß verwendeten polymeren Thiosulfaten in wässeriger und/oder alkoholischer Lösung duchgeführt werden, also in einem Lösungsmittel, das nicht nur umweltfreundlich ist, sondern neben einem geringen Preis auch erhebliche produktionstechnische Vorteile bietet. Außerdem haben die erfindungsgemäßen polymeren Thiosulfate gegenüber monomeren Alkylthiolen den Vorteil, in einer sehr schnell ablaufenden Reaktion, sehr dichte hydrophile sowie amorphe Filme mit weitestgehend definierter Schichtdicke (wenige Nanometer) auf Metalloberflächen zu bilden. Gegenüber herkömmlichen Beschichtungsverfahren hat die Beschichtung den Vorteil, technisch sehr einfach durchführbar zu sein und auch für beliebig geformte Körper (z.B. Innenwände von Röhren) geeignet zu sein. Die so erhaltenen Monolagen zeichnen sich durch hohe mechanische Festigkeit und große Hydrophilie aus. Dieser Umstand kann dazu genutzt werden, eine erheblich verbesserte Haftung von herkömmlichen und handelsüblichen Klebstoffen und Lacken auf Metalloberflächen zu erzielen. Weiterhin ist bekannt, daß körpereigene Proteine und verschiedene für die Thrombozytenaggregation verantwortliche Moleküle sich an hydrophilen Oberflächen nicht oder nur in sehr geringem Maß ablagern. Deshalb kann davon ausgegangen werden, daß eine gute Bioverträglichkeit dieser Beschichtungen zu erwarten ist. Darüberhinaus können kolloidale Metallpartikel stabilisiert werden. Vorzugsweise ist das kolloidal gelöste Metall Gold, Silber, Palladium, Platin, Quecksilber oder Kupfer. Die Anwendung der erfindungsgemäß verwendeten polymeren Thiosulfate ist aber nicht nur auf Metalloberflächen beschränkt, sondern kann auch auf jede andere kationisierte- und/oder aminöhaltige Oberfläche angewandt werden. Solche Oberflächen können beispielsweise Polymeroberflächen sein, wie z.B. jene von Kunststoffimplantaten.

Die sich ergebenden möglichen Anwendungen dieser Moleküle sind nachfolgend dargestellt:

(a) Verhinderung von Korrosion und Oxidation bei Edelmetallen, z.B. Silber (Schwarzwerden), Halbedelmetallen, z.B. Kupfer (Grünspan), Nickel. Anwendungen zur Konservierung von z.B. Sammlermünzen, Brillengestellen, Schmuck.

(b) Verbesserung der Wasserbenetzbarkeit von Metalloberflächen.

(c) Verbesserung der Haftung von Klebstoffen, Lacken und Verbundwerkstoffen an Metalloberflächen.

(d) Stabilisierung von Metall-Kolloiden, z.B. können die polymeren Bunte-Salze als Schutzkolloid wirken.

(e) Abgabe von pharmazeutischen Wirkstoffen (z.B. Enzündungshemmern), inkludiert in nach dem erfindungsgemäßen Verfahren mit Cyclodextrinen oder Amylose beschichteten Metalloberflächen.

(f) Erhöhung der Biokompatibilität (z. B. Herabsetzung von Blutgerinnung und Allergien), Behandlung von Metalloberflächen für medizinische Anwendungen (chirurgische Instrumente, z.B. Mikrowerkzeuge, Stents, Endo-Prothesen, z.B. Herzklappen, Gelenkpfannen, Schrauben, Sensoren, minimalinvasive Galvanoplastiken etc.).

(g) Verbesserung der Anknüpfung von Proteinmolekülen (z.B. Enzymen, Antikörpern, Antigenen) an Metalloberflächen und Metallkolloiden.

(h) Erzeugung nanostrukturierter Polymeroberflächen durch selektive Adsorption der polymeren Bunte-Salze auf Metall-Mustern (z.B. lithographisch erzeugte nanostrukturierte Goldmuster auf Siliziumoberflächen).

(i) Immobilisierung von Metallkolloidteilchen auf festen Oberflächen.

(j) Versiegelung von Metalloberflächen zur Verhinderung von Kontaktallergien, z.B. Nickelallergie.

(k) Basisbeschichtung für das Aufbringen von anderen Polymeren, z.B. Proteinen, insbesondere Antikörper. Der Einsatz von Multischichten auf der Basis der erfindungsgemäßen Beschichtung kann in der medizinischen Diagnostik eingesetzt werden.

Die Bildung von Schichten, die sich aus den erfindungsgemäß verwendeten Verbindungen aufbauen, erfolgt innerhalb weniger Minuten. Darüberhinaus sind die sich bildenden Schichten amorph und ausgesprochen dicht, und selbst bei extrem niedriger Schichtdicke mechanisch sehr beständig. Desweiteren bietet sich die Möglichkeit, diese Beschichtung weiter zu funktionalisieren und chemisch zu verändern. Die erfindungsgemäßen Schichten können als beständige und fest anhaftende Plattform für Mehrschichtbeschichtungen (z.B. für Oberflächenveredelung oder Anbindung von Proteinen) genutzt werden.

Die Figuren zeigen:

Fig. 1: schematische Darstellung von Struktureinheiten, die in einem erfindungsgemäß verwendeten polymeren Thiosulfat gemäß Beispiel 1 vorhanden sein können.

Fig. 2: Spektren von (3-Allyloxy-2-hydroxypropyl)-cellulose (a) $^1$H-NMR und (b) $^{13}$C-DEPT-NMR.

Fig. 3: Spektren von (3-Thiosulfatopropyl-oxy-2-hydroxypropyl)-cetfulose (a) $^1$H-NMR und (b) $^{13}$C-DEPT-NMR.

Fig.4: FT-IR-Spektren von (a) (3-Thlosultatopropyl-oxy-2-hydroxypropyl)-cellulose-Pulver und (b) ultradünner Schicht von (3-Thiosulfatopropyl-oxy-2-hydroxypropyl)-cellulose auf Gold.

Fig. 5: XPS-Messungen von (3-Thiosulfatopropyl-oxy-2-hydroxypropyl)-cellulose auf (a) Siliziumwafer und (b) Goldoberfläche.

Fig. 6: Adsorptionsisotherme von TSHP-cellulose bei Raumtemperatur auf (a) Gold und (b) Silber.

**Beispiel 1: Synthese von (3-Thiosulfatopropyl-oxy-2-hydroxypropyl)-cellulose - im folgenden TSHP-cellulose genannt**

Zuerst wird Cellulose zu (3-Allyloxy-2-hydroxypropyl)-cellulose umgesetzt. In einem zweiten Schritt wird durch Additionsreaktion von Tetrathionat an die AllylGruppe TSHP-cellulose hergestellt, s. Fig. 1.

**a) Darstellung der (3-Allyloxy-2-hydroxypropyl)-cellulose**

5,0 g (30,7 mmol) mikrokristalline Cellulose werden in 90 ml 25%iger NaOH Lösung 48 Stunden gerührt und anschließend mit weiteren 90 ml Wasser verdünnt. Man gibt 35,4 g (310 mmol) Allylglycidylether (Aldrich) zu und läßt zuerst 2 Stunden bei Raumtemperatur und danach noch weitere 6 Tage bei 60°C rühren. Nach Abkühlung wird diese Lösung mit konz. Salzsäure neutralisiert. Die wäßrige Lösung wird durch kontinuierliche Ultrafiltration gegen eine

UF-PA-5 Membran (Hoechst-Kalle) gereinigt, bis 1000 ml Permeat entstehen. Das Retenat wird gefriergetrocknet. Die Ausbeute beträgt 3,15g (79.5%) eines weißen Feststoffes.

**Strukturnachweise**:**$^1$H-NMR ($D_2O$)** : δ = 5,76 (m, 1H, H-e), 5,08-5,20 (m, 2H, H-f), 4,34 (s, 1H, C-1 ), 3,89 (s, H-d), 3,82 (m, 2H, H-5,H-4), 3,45-3,17 (m, 9H, H-a H-b H-c H-3,2 H-6); s. Fig. 2a.

**$^{13}$C-DEPT-NMR (DMSO-$d_6$)** : δ = 1 35,3 (C-e), 116,3 (C-f), 102,8 (C-1), 80,3 (C-4), 74,7 (C-3, C-5, C-2), 73,0-71,7 (C-a, C-d, C-c), 68,5 (C-b), 60,2 (C-6); s. Fig. 2b.

**IR** : 3399s, 2871s, 1644m, 1419w, 1369w, 1316w, 1250w, 1066s, 932w $cm^{-1}$

**Elementaranalyse** : berechnet für $\{[C_6H_{10})O_5]_{0.3}[C_{12}H_{20}O_7]_{0.7}\}_n$ (n = 200) C: 43,48 H: 7,66, gefunden C: 43,39 H: 6,46

**b) Synthese von (3-Thiosulfatopropyl-oxy-2-hydroxypropyl)-cellulose - im folgenden TSHP-cellulose genannt.**

1g (7.75 mmol) (3-Allyloxy-2-hydroxypropyl)-cellulose, wie vorstehend hergestellt, und 3,1 8g Kaliumtetrathionat (Aldrich) werden in 100 ml $H_2O$ gerührt und unter Rückfluß auf 100°C erwärmt. Nach 2 Tagen wird die gelbliche Lösung abgekühlt und durch einen Nylonfilter mit einer Porenweite von 0,45 µm filtriert. Das Filtrat wird durch kontinuierliche Ultrafiltration gegen eine UF-PA-5 Membran (Hoechst-Kalle) gereinigt, bis 1000 ml Permeat entstanden sind. Das Retentat wird gefriergetrocknet. Die Ausbeute beträgt 0,44g (34,1%) eines weißen Feststoffes.

**Strukturnachweise: $^1$H-NMR ($D_2O$) :** δ = 5,76 (m, 1H, H-e), 5,08-5,20 (m, 2H, H-f), 4,34 (s, 1H, C-1 ), 3,89 (s, H-d), 3,82 (m, 2H, H-5,H-4), 3,45-3,17 (m, 9H, H-a, H-b, H-c, H-3, H-2, H-6), 1 ,91 (m,1H, H-f '), 1 , 28 (m, 1H, H-e'); s. Fig. 3a.

**$^{13}$C-DEPT-NMR (DMSO-$d_6$) :** δ = 135,3 (C-e'), 116,3 (C-f'), 102,8 (C-1), 80,3 (C-4), 74,7 (C-3, C-5, C-2), 73,0-71,7 (C-a, C-d, C-c), 68,5 (C-b), 60,2 (C-6); s. Fig. 3b.

**IR :** 3399s, 2871 s, 1 644m, 1419w, 1369w, 1316w, 1250w, 1 198m, 1017m, 932w, 601s, 408m $cm^{-1}$; s. Fig. 4a.

**Elementaranalyse :** berechnet für $\{[C_6H_{10}O_5]_{0.3}[C_{12}H_{19}O_{13}S_4]_{0.1}[C_{12}H_{20}O_7]_{0.6}\}_n$ (n = 200) ; C: 41.65 H: 6.72 S: 4.35 gefunden C: 41.1 H: 6.35 S: 4.57

Die polymergebundenen Thiosulfat-Gruppen wurden durch die charakteristischen IR-Banden (1250, 1017 and 601 $cm^{-1}$), durch Elementaranalyse und durch XPS Messungen (Fig. 5) nachgewiesen.

**Beispiel 2: Synthese von (3-Thiosulfatopropyl-oxy-2-hydroxypropyl-carboxymethylcellulose - im folgenden TSHP-CMC genannt.**

**a) Darstellung von (3-Allyloxy-2-hydroxypropyl)-carboxymethylcellulose**

1,0 g (4,13 mmol) Carboxymethylcellulose ( Mw 250.000, DS = 0,9) werden in 10 ml 25%iger NaOH Lösung gelöst und mit 30 ml $H_2O$ verdünnt. Nach 4 Stunden gibt man 9,62 g (84,3 mmol) Allylglycidylether (Aldrich) zu und rührt 2 Stunden bei Raumtemperatur und weitere 3 Tage bei 60°C. Nach Abkühlung wird die wässerigen Lösung durch kontinuierliche Ultrafiltration gegen eine UF-PA-5 (Hoechst-Kalle) Membran gereinigt, bis 1000 ml Permeat entstanden. Das Retenat wird gefriergetrocknet. Die Ausbeute beträgt 1,4 g (50 %) eines weißen Feststoffes.

**Strukturnachweise: $^1$H-NMR ($D_2O$) :** δ = 5,76 (m, 1H, H-e), 5,08-5,20 (m, 2H, H-f), 4,34 (s, 1H, C-1), 3,90 (s 2H, $-CH_2-$) 3,89 (s, H-d), 3,82 (m, 2H, H-5,H-4), 3,45-3,17 (m, 9H, H-a, H-b, H-c, H-3, H-2, H-6).

**$^{13}$C-DEPT-NMR ($D_2O$) :** δ = 177,4 (C = O), 136,7 (C-e), 121,1 (C-f), 104,4 (C-1), 84,4 (C-2), 80,6 (C-4), 75,8 (C-a, C-d, C-c), 74,7 (C-5), 73,9 ($-CH_2-$), 71,7 (C-3, C-b), 65,9 (C-6).

**IR :** 3271 s, 2884s, 1729s, 1596m, 1426w, 1325w, 1250-950w, 932w $cm^{-1}$

**b) Synthese von TSHP-CMC**

0,2 g (0,6 mmol) (3-Allyloxy-2-hydroxypropyl)-carboxymethylcellulose werden in 90 ml $H_2O$ gerührt. Nach 2 Stunden werden 1,190 g (3,94 mmol) Kaliumtetrathionat gelöst in 20 ml $H_2O$ zugegeben und dann unter Rückfluß auf 90°C erwärmt. Nach 2 Tagen wird die gelbliche Lösung abgekühlt und filtriert. Die Filtrat wird durch kontinuierliche Ultrafiltration gegen eine UF-PA-5 Membran (Hoechst-Kalle) gereinigt, bis 1000 ml Permeat entstanden. Das Retenat wird gefriergetrocknet. Die Ausbeute beträgt 0,67g (45 %) eines weißen Feststoffes.

**Strukturnachweise: $^1$H-NMR ($D_2O$) :** δ = 5,76 (m, 1H, H-e), 5,08-5,20 (m, 2H, H-f), 4,34 (s, 1H, C-1), 3,90 (s 2H, $-CH_2-$) 3,89 (s, H-d), 3,82 (m, 2H, H-5, H-4), 3.45-3.17 (m, 9H, H-a, H-b, H-c, H-3, H-2, H-6).

**$^{13}$C-DEPT-NMR ($D_2O$) :** δ = 177,4 (C = O), 136,7 (C-e), 1 21 ,1 (C-f), 104,4 (C-1), 85,6 (C-2), 81,7 (C-4), 75,8 (C-a, C-d, C-c), 78,6 (C-5), 73,9 ($-CH_2-$), 77,3 (C-3, C-b), 72,3 (C-g), 65,9 (C-f'), 63.6 (C-6).

**IR :** 3271s, 2884s, 1729s, 1596m, 1426w, 1325w, 1192w, 1062w, 932w, 615m $cm^{-1}$.

Nachfolgend wird der grundsätzliche Wirkungsmechanismus der Verbindung als Beschichtungsmaterial erklärt, sowie durch mehrere Beispiele weiter ausgeführt.

Die Ausführung von Beschichtungen mittels der polymeren Thiosulfate ist sehr einfach, da sie aus wässeriger Lösung erfolgt. Die Metalloberflächen werden in eine wässerige Lösung, z.B von TSHP-cellulose, für einige Minuten eingetaucht oder mit dieser besprüht (s. Beisp. 3). Die Methode ist auch für gekrümmte schwerzugängliche Oberflächen (z.B. Schläuche, Röhren) geeignet. Die so erhaltenen Schichtdicken (Bereich 4,0 - 5,0 nm) sind gut reproduzierbar und können genau kontrolliert werden. Schon bei sehr niedrigen Konzentrationen werden dichte Schichten mit reproduzierbarer Dicke erhalten. Die Haftung des polymeren Alkylthiosulfates an den Metalloberflächen ist sehr gut. Die Stabilität der Schicht kann durch nachfolgendes Beschichten mit einem Polykation weiter erhöht werden, da die Polyelektrolyt-Wechselwirkung zu einer physikalischen Vernetzung führt.

Dieses Beschichtungsverfahren kann durch die folgenden Annahmen plausibel gemacht werden.

Zuerst wird die S-S Bindung der Thiosulfonat-Gruppen unter Bildung von ThiolS• und Sulfit- $•SO_3$- Radikalen homolytisch gespalten. Das Metall [Me], vorzugsweise Gold, wird vom Thiolradikal oxidiert, wobei die S-[Me] Bindung entsteht (Gl. 2). Das Sulfitradikal $•SO_3^-$ dimerisiert wahrscheinlich zu Dithionit (Gl. 3).

$$R\text{-}S\text{-}SO_3^{\ -} + Au^0 \rightarrow R\text{-}S^-Au^+ + •SO_3^- \qquad (2)$$

$$2\ •SO_3^- \rightarrow S_2O_6^{\ 2-} \qquad (3)$$

Dieser Mechanismus wurde durch XPS-Messungen (Fig. 5) bestätigt. Während (3-Thiosuffatopropyl-oxy-2-hydroxypropyll-cellulose auf Silizium (Fig. 5a) XPS Signale bei 163,5 eV für Sulfid und 168,5 eV für Sulfonat zeigt, erhält man für (3-Thiosulfatopropyl-oxy-2-hydroxypropyl)-cellulose auf Gold (Fig. 5b) nur ein Signal bei 162,5 eV für Sulfid. Die Chemisorption ist irreversibel. Nach der Beschichtung kann man die beschichteten Proben in reinem Wasser einlagern, ohne Desorption von 3-Thiosulfatopropyl-oxy-2-hydroxypropyl)-cellulose.

Die vorliegende Erfindung wird durch die nachstehenden Beispiele näher erläutert.

**Beispiel 3: Beschichtung von Gold mittels TSHP**

Als Substrate wurden planare Glas- oder Siliziumträger verwendet, auf welche Gold aufgedampft wurde (thermisches Aufdampfen bei $\sim 4 \times 10^{-5}$ mbar). Die Goldschichten waren im Durchschnitt 500 Å dick. Die Substrate werden in eine 0,1 Gew%-ige wässerige Lösung von TSHP-cellulose (gemäß Beispiel 1 hergestellt) bei Raumtemperatur eingetaucht und eine Stunde stehengelassen. Anschließend werden sie mehrmals in Wasser gespült und im $N_2$-Strom getrocknet.

Nach der Beschichtung der Goldsubstrate mit TSHP wird der fortschreitende (advancing) Kontaktwinkel, bzw. ein rückziehender (receeding) Kontaktwinkel [Adamson, A. *Physical Chemistry of Surfaces* 4th. ed.; John Wiley & Sons: New York, 1982], von 50 ° ± 3°, bzw, von 16° ± 2 ° für Wassertropfen gemessen. Das unbeschichtete Goldsubstrat hat für Wassertropfen einen fortschreitenden Kontaktwinkel, bzw. einen rückziehenden (receeding) Kontaktwinkel, von 90° ± 2°, bzw. 55° ± 2°.

Das Adsorptionsverhalten von TSHP-cellulose aus wässeriger Lösung auf Goldoberflächen wurde für verschiedene Adsorptionszeiten und Ausgangskonzentrationen (0,2 - 3,0 mg/ml) untersucht (s. Fig. 6a). Die Schichtdicke von Substraten, die sowohl nur fünf Minuten, als auch 24 Stunden in der wässerigen Lösung von TSHP-cellulose eingetaucht wurden, weisen ähnliche Werte auf. Die Schichtdicke der chemisorbierten TSHP-cellulose auf Gold wurde an Luft mittels Null-Ellipsometrie [R.M. Azzam, N.M. Bashara, *Ellipsometry and Polarized Light;* North Holland Publication: Amsterdam, 1979] bestimmt. Sie beträgt im Mittel 4,5 ± 0,5 nm. Die adsorbierte Menge wurde nach dem Produkt Schichtdikke Dichte berechnet. Für TSHP-cellulose wurde die Dichte als 1,5 $g/cm^3$ genommen [Brandrup, J.; Immergut, E.H. *Polymer Handbook,* 3rd. ed.; John Wiley & Sons: New York, 1989].

Die Chemisorption von TSHP-cellulose auf Goldoberflächen wurde mittels FT-IR Messungen nachgewiesen. Dünne TSHP-cellulose-Schichten auf Gold und TSHPcellulose-Pulver zeigen die gleichen charakteristischen Absorptionsbanden: im Frequenzbereich von 3400-3200 cm-1 (OH-Gruppe), 2930-2850 $cm^{-1}$ (CH-, $CH_2$ Gruppen), 1374 $cm^{-1}$ (C-OH- Gruppe), 1250-1500 $cm^{-1}$ (CH-, C-O-C Gruppen) und 1199 $cm^{-1}$ (C-C -Gruppe) (s. Fig. 4b).

**Beispiel 4: Beschichtung von TSHP-cellulose Schichten auf Gold mit Proteinen**

TSHP-cellulose-Schichten auf Gold gemäß Beispiel 2 wurden für 24 Stunden in eine wässerige Lösung von *bovine serum albumin* (BSA) bzw. Fibrinogen (Konzentration = 1 ,0 mg/ml) bei 25 ° C eingetaucht. Danach werden die Proben mit Wasser gespült und getrocknet. Mittels Null-Ellipsometrie wurde eine Zunahme der Schichtdicke für BSA von 0,4 nm und für Fibrinogen von 1 ,4 nm gemessen. Im Vergleich zu anderen Materialien, wie z.B. Glas oder

hydrophobisiertem Glas [M. Malmstrem, *J. Colloid Interface Sci.* **1994,** 166, 333-342], sind diese erreichten Schichtdicken sehr klein.

**Beispiel 5: Beschichtung von Silberoberflächen mit TSHP-cellulose**

Die verwendeten Substrate wurden durch Aufdampfung von Silber (thermische Aufdampfung bei $\sim 4 \times 10^{-5}$ mbar) auf planaren Siliziumträgern hergestellt. Die Ag-Schichten waren im Durchschnitt 500 Å dick. Die Substrate werden in eine wässerige Lösung von TSHP-cellulose (gemäß Beispiel 1 hergestellt) bei Raumtemperatur eingetaucht und eine Stunde stehengelassen. Anschließend werden sie mehrmals mit Wasser gespült und im $N_2$-Strom getrocknet. Um die Dichtigkeit der Oberfläche zu überprüfen, wurden die beschichteten Siliziumträger über einen Zeitraum von 11 Stunden bei Raumtemperatur mit einer Vergleichsprobe einer Schwefelwasserstoffatmosphäre ausgesetzt. Hierbei zeigte sich, daß die mit den erfindungsgemäßen polymeren Thiosulfaten beschichteten Substrate keinerlei Verfärbung aufwiesen.

Das Adsorptionsverhalten von TSHP-cellulose aus wässerigen Lösungen auf Silberoberflächen wurde für verschiedene Adsorptionszeiten und Ausgangskonzentrationen (0,2 - 3,0 mg/ml) untersucht (s. Fig. 6b). Die Schichtdicke der chemisorbierten TSHP-cellulose auf Silber wurde an Luft mittels Null-Ellipsometrie [R.M. Azzam, N.M. Bashara, *Ellipsometry and Polarized Light;* North Holland Publication: Amsterdam, 1979] bestimmt. Sie beträgt im Mittel 4,0 ± 0,5 nm.

Die adsorbierte Menge wurde nach dem Produkt Schichtdicke Dichte berechnet. Für TSHP-cellulose wurde die Dichte als 1.5 g/cm$^3$ genommen [Brandrup, J.; Immergut, E.H. *Polymer Handbook,* 3rd. ed.; John Wiley & Sons: New York, 1989].

**Beispiel 6: Beschichtung von Goldoberflächen mit TSHP-CMC**

Eine 500 Å Goldschicht wurde auf einen Si-wafer thermisch aufgedampft (4,0 $10^{-5}$ mbar) und in eine wässerige Lösung von TSHP-CMC (gemäß Beispiel 5 hergestellt) eingetaucht. Unabhängig von den Ausgangskonzentrationen (0,2 - 2,0 mg/ml) der TSHP-CMC beträgt die Schichtdicke der chemisorbierten TSHP-CMC auf Gold, bestimmt mittels Null-Ellipsometrie [R.M. Azzam, N.M. Bashara, *Ellipsometry and Polarized Light;* North Holland Publication: Amsterdam, 1979], im Durchschnitt 3,0 nm ± 0,5 nm.

Der fortschreitende (advancing) Kontaktwinkel, bzw. ein rückziehender (receeding) Kontaktwinkel [Adamson, A. *Physical Chemistry of Surfaces* 4th. ed.; John Wiley & Sons: New York, 1982], war von 40 ° ± 3 bzw. von 15 ° ± 2°, gemessen für Wassertropfen. Das unbeschichtete Goldsubstrat hat für Wassertropfen einen fortschreitenden Kontaktwinkel bzw. einen rückziehenden (receeding) Kontaktwinkel von 90° ± 2° bzw. 55° ± 2°.

## Patentansprüche

1. Verwendung von löslichen polymeren Thiosulfaten mit Struktureinheiten der allgemeinen Formeln I und/oder II,

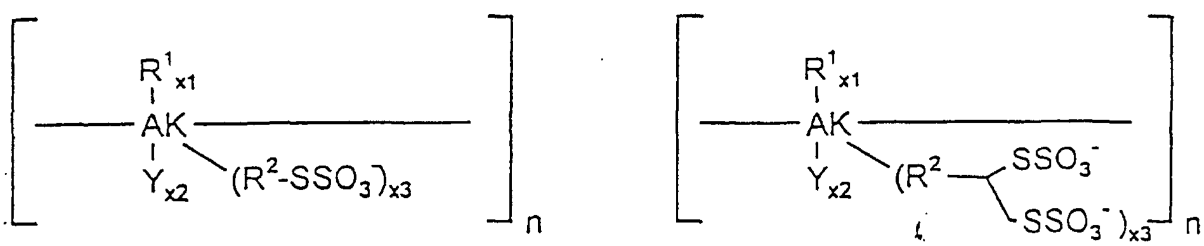

I II

worin AK eine Anhydro-Kohlenhydrateinheit bedeutet, der Rest $R^1$ ein Wasserstoffatom, einen gerad- oder verzweigtkettigen ($C_1$-$C_{30}$)-Alkylrest, einen gerad- oder verzweigtkettigen ($C_1$-$C_{30}$)-Alkanoylrest, einen gerad- oder verzweigtkettigen ($C_2$-$C_{30}$)-Alkylenoxyalkylrest, einen gerad- oder verzweigtkettigen ($C_2$-$C_{30}$)-Alkylenoxoalkylrest, einen ($C_2$-$C_{30}$)-Alkenylrest, einen ($C_2$-$C_{30}$)-Alkenoylrest, einen ($C_2$-$C_{30}$)-Alkinylrest, einen gerad- oder verzweigtkettigen ($C_5$-$C_{30}$)-Cycloalkylrest, einen substituierten oder unsubstituierten ($C_5$-$C_{30}$)-Arylrest, der ein oder mehrere Heteroatome aufweisen kann, oder einen substituierten oder unsubstituierten ($C_5$-$C_{30}$)-Aryloylrest, der ein oder mehrere Heteroatome aufweisen kann, bedeutet, wobei der Rest $R^1$ jeweils an ein Sauerstoffatom der Anhydro-Kohlenhydrateinheit gebunden ist und der Substitutionsgrad x1 0,1,2 oder 3 ist, der Rest $R^2$ einen bivalenten Spacer, ausgewählt aus einem substituierten oder unsubstituierten ($C_1$-$C_{30}$)-Alkylenrest, einem substituierten oder unsubstituierten ($C_1$-$C_{30}$)-Hydroxyalkylenrest, einem substituierten oder unsubstituierten ($C_1$-$C_{30}$)-Oxoalkylenrest, einem substituierten oder unsubstituierten ($C_2$-$C_{30}$)-Alkylenoxoalkylenrest, einem substituierten oder unsubstituierten ($C_2$-$C_{30}$)-Alkylenoxyalkylenrest, einem substituierten oder unsubstituierten ($C_2$-$C_{30}$)-Hydroxyalkylenoxyalkylenrest, einem substituierten oder unsubstituierten ($C_2$-$C_{30}$)-Alkylenoxyhydroxyalkylenrest, einem ($C_2$-$C_{30}$) -Alkenylrest, einem ($C_2$-$C_{30}$)-Alkinylrest, einem substituierten oder unsubstituierten ($C_5$-$C_{30}$)-Cycloalkylenrest oder einem substituierten oder unsubstituierten ($C_5$-$C_{30}$)-Arylenrest, der einen oder mehrere Heteroatome aufweisen kann, bedeutet, wobei der Rest $R^2$ jeweils an ein Sauerstoffatom der Anhydro-Kohlenhydrateinheit gebunden ist und der Substitutionsgrad x3 0,1,2 oder 3 ist, Y eine funktionelle Gruppe, ausgewählt aus einer Nitrat-, einer Aminodesoxy-, einer substituierten oder unsubstituierten Amino-, einer Carboxyalkyl-, einer Hydroxyalkyl-, einer Sulfat-, einer Sulfonat-, einer Carbonat- oder einer Xanthogenatgruppe, bedeutet, wobei der Substitutionsgrad x2 0,1,2 oder 3 ist, mit den Maßgaben, daß die Summe von x1, x2 und x3 $\leq$ 3 ist und x3 nicht über die gesamte Polymerkette gleich 0 ist, und n einen Polymerisationsgrad zwischen 1 und 10 000 bedeutet, wobei die Verknüpfung der Anhydro-Kohlenhydrateinheiten linear, zyklisch, verzweigt oder vernetzt ist,
zur Beschichtung von Substratoberflächen, wobei die Substrate aus Metallen ausgewählt sind, deren Oberflächen durch Eintauchen in wässerige und/oder alkoholische Lösungen von mindestens einem der polymeren Thiosulfate beschichtet werden.

2. Verwendung nach Anspruch 1, wobei die Anhydro-Kohlenhydrateinheit AK eine Anhydroglucose-Einheit bedeutet.

3. Verwendung nach Anspruch 1 oder 2, wobei das polymere Thiosulfat (3-Thiosulfatopropyl-oxy-2-hydroxypropyl)-cellulose ist.

4. Verwendung nach einem der Ansprüche 1 bis 3, wobei die Metallsubstrate Legierungen, Edel- oder Halbedelmetalle sind.

5. Verwendung nach Anspruch 4, wobei das Edelmetall Gold oder Silber ist.

6. Verwendung nach einem der Ansprüche 1 bis 5, wobei die Metallsubstrate nanostrukturiert sind.

7. Verwendung nach einem der Ansprüche 1 bis 6, wobei Proteine, Enzyme, Antikörper, Antigene, pharmazeutische Wirkstoffe oder radioaktive Isotope durch Adsorption oder kovalente Bindung an die mit dem oder den polymeren Thiosulfat(en) beschichteten Oberflächen gebunden werden.

## Claims

1. Use of soluble polymeric thiosulfates having structural units of the general formulae I and/or II

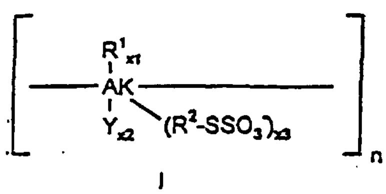
I

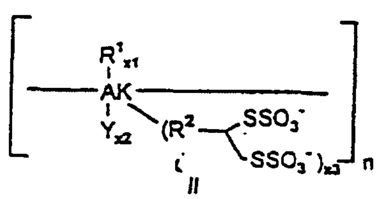
II

wherein AK is an anhydro-carbohydrate unit, the residue $R^1$ is a hydrogen atom, a straight-chain or a branched-chain ($C_1$-$C_{30}$) alkyl residue, a straight-chain or a branched chain ($C_1$-$C_{30}$) alkanoyl residue, a straight-chain or a branched-chain ($C_2$-$C_{30}$) alkyleneoxyalkyl residue, a straight-chain or a branched-chain ($C_2$-$C_{30}$) alkyleneoxoalkyl residue, a ($C_2$-$C_{30}$) alkenyl residue, a ($C_2$-$C_{30}$) alkenoyl residue, a ($C_2$-$C_{30}$) alkynyl residue, a straight-chain or a branched-chain ($C_5$-$C_{30}$) cycloalkyl residue, a substituted or unsubstituted ($C_5$-$C_{30}$) aryl residue which may have one or more heteroatoms, or a substituted or unsubstituted ($C_5$-$C_{30}$) aryloyl residue which may have one or more heteroatoms, where the residue $R^1$ is bonded in each case to an oxygen atom of the anhydro-carbohydrate unit and the degree of substitution x1 is 0, 1, 2, or 3, the residue $R^2$ is a bivalent spacer selected from a substituted or unsubstituted ($C_1$-$C_{30}$) alkylene residue, a substituted or unsubstituted ($C_1$-$C_{30}$) hydroxyalkylene residue, a sub-

stituted or unsubstituted ($C_1$-$C_{30}$) oxoalkylene residue, a substituted or unsubstituted ($C_2$-$C_{30}$) alkyleneoxoalkylene residue, a substituted or unsubstituted ($C_2$-$C_{30}$) alkyleneoxyalkylene residue, a substituted or unsubstituted ($C_2$-$C_{30}$) hydroxyalkyleneoxyalkylene residue, a substituted or unsubstituted ($C_2$-$C_{30}$) alkyleneoxyhydroxyalkylene residue, a ($C_2$-$C_{30}$) alkenyl residue, a ($C_2$-$C_{30}$) alkyl residue, a substituted or unsubstituted ($C_5$-$C_{30}$) cycloalkylene residue or a substituted or unsubstituted ($C_5$-$C_{30}$) arylene residue which may have one or more heteroatoms, where the residue $R^2$ in each case is bonded to an oxygen atom of the anhydro-carbohydrate unit and the degree of substitution x3 is 0, 1, 2 or 3, Y is a functional group selected from a nitrate group, an aminodeoxy group, a substituted or unsubstituted amino group, a carboxyalkyl group, a hydroxyalkyl group, a sulfate group, a sulfonate group, a carbonate group or a xanthogenate group, where the degree of substitution x2 is 0, 1, 2 or 3, provided that the sum of x1, x2 and x3 $\leq$ 3 and that x3 is not 0 over the entire polymer chain, and where n denotes a degree of polymerization between 1 and 10,000, the linkage of the anhydrocarbohydrate units being linear, cyclic, branched or crosslinked, for coating surfaces of substrates, where the substrates are selected from metals whose surfaces are coated by being immersed in aqueous and/or alcoholic solutions of at least one of the polymeric thiosulfates.

2. Use according to claim 1, wherein the anhydrocarbohydrate unit AK denotes an anhydroglucose unit.

3. Use according to claim 1 or 2, wherein the polymeric thiosulfate is (3-thiosulfatopropyl-oxy-2-hydroxypropyl)-cellulose.

4. Use according to any of claims 1 to 3, wherein the metal substrates are alloys, precious metals or semiprecious metals.

5. Use according to claim 4, wherein the precious metal is gold or silver.

6. Use according to any of claims 1 to 5, wherein the metal substrates are nano-structured.

7. Use according to any of claims 1 to 6, wherein proteins, enzymes, antibodies, antigens, pharmaceutically active substances or radioactive isotopes are bonded by adsorptions or covalent bonding to the surfaces coated with the polymeric thiosulfate(s).

## Revendications

1. Utilisation de thiosulfates polymères solubles à motifs structuraux de formules générales I et/ou II

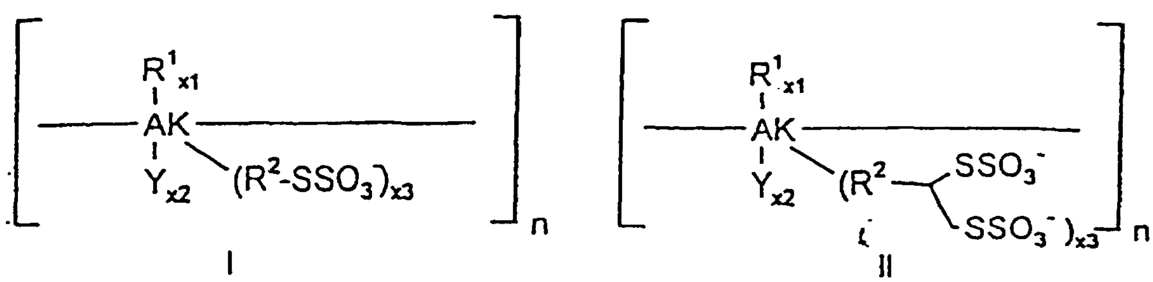

I II

dans lesquelles AK désigne un motif anhydro-glucidique, le reste $R^1$ est un atome d'hydrogène, un reste alkyle en $C_1$ à $C_{30}$ linéaire ou ramifié, un reste alcanoyle en $C_1$ à $C_{30}$ linéaire ou ramifié, un reste alcényloxyalkyle en $C_2$ à $C_{30}$ linéaire ou ramifié, un reste alkylène-oxyalkyle en $C_2$ à $C_{30}$ linéaire ou ramifié, un reste alcényle en $C_2$ à $C_{30}$, un reste alcénoyle en $C_2$ à $C_{30}$, un reste alcynyle en $C_2$ à $C_{30}$, un reste cycloalkyle en $C_5$ à $C_{30}$ linéaire ou ramifié, un reste aryle en $C_5$ à $C_{30}$ substitué ou non substitué, qui peut contenir un ou plusieurs hétéroatomes, ou un reste aryloyle en $C_5$ à $C_{30}$ substitué ou non substitué qui peut contenir un ou plusieurs hétéroatomes, le reste $R^1$ étant lié dans chaque cas à un atome d'oxygène du motif anhydro-glucidique et le degré de substitution x1 étant égal à 0, 1, 2 ou 3, le reste $R^2$ est un espaceur bivalent, choisi entre un reste alkylène en $C_1$ à $C_{30}$ substitué ou non substitué, un reste hydroxyalkylène en $C_1$ à $C_{30}$ substitué ou non substitué, un reste oxo-alkylène en $C_1$ à $C_{30}$ substitué ou non substitué, un reste alkylène-oxo-alkylène en $C_2$ à $C_{30}$ substitué ou non substitué, un reste alkylène-oxyalkylène en $C_2$ à $C_{30}$ substitué ou non substitué, un reste hydroxyalkylène-oxy en $C_2$ à $C_{30}$ substitué

ou non substitué, un reste alkylène-oxyhydroxyalkylène en $C_2$ à $C_{30}$ substitué ou non substitué, un reste alcényle en $C_2$ à $C_{30}$, un reste alcynyle en $C_2$ à $C_{30}$, un reste cycloalkylène en $C_5$ à $C_{30}$ substitué ou non substitué ou un reste arylène en $C_5$ à $C_{30}$ substitué ou non substitué, qui peut contenir un ou plusieurs hétéroatomes, le reste $R^2$ étant lié dans chaque cas à un atome d'oxygène du motif anhydro-glucidique et le degré de substitution x3 étant égal à 0, 1, 2 ou 3, Y est un groupe fonctionnel choisi entre un groupe nitrate, un groupe aminodésoxy, un groupe amino substitué ou non substitué, un groupe carboxyalkyle, un groupe hydroxyalkyle, un groupe sulfate, un groupe sulfonate, un groupe carbonate ou un groupe xanthogénate, le degré de substitution x2 étant égal à 0, 1, 2 ou 3, sous réserve que la somme de x1, x2 et x3 soit inférieure ou égale à 3 et que x3 ne soit pas égal à 0 sur toute la chaîne polymère, et n désigne un degré de polymérisation entre 1 et 10 000, la liaison des motifs anhydro-glucidiques étant linéaire, cyclique, ramifiée ou réticulée,

pour le revêtement de surfaces de substrats, les substrats étant choisis parmi des métaux dont la surface est revêtue par immersion dans des solutions aqueuses et/ou alcooliques d'au moins l'un des thiosulfates polymères.

**2.** Utilisation suivant la revendication 1, dans laquelle le motif anhydro-glucidique AK est un motif anhydroglucose.

**3.** Utilisation suivant la revendication 1 ou 2, dans laquelle le thiosulfate polymère est la (3-thiosulfatopropyl-oxy-2-hydoxypropyl)-cellulose.

**4.** Utilisation suivant l'une des revendications 1 à 3, dans laquelle les substrats métalliques sont des alliages, des métaux nobles ou des métaux semi-nobles.

**5.** Utilisation suivant la revendication 4, dans laquelle le métal noble est l'or ou l'argent.

**6.** Utilisation suivant l'une des revendications 1 à 5, dans laquelle les substrats métalliques sont nano-structurés.

**7.** Utilisation suivant l'une des revendications 1 à 6, dans laquelle des protéines, des enzymes, des anticorps, des antigènes, des substances pharmaceutiques actives ou des isotopes radioactifs sont liés par adsorption ou par covalence aux surfaces revêtues du ou des thiosulfates polymères.

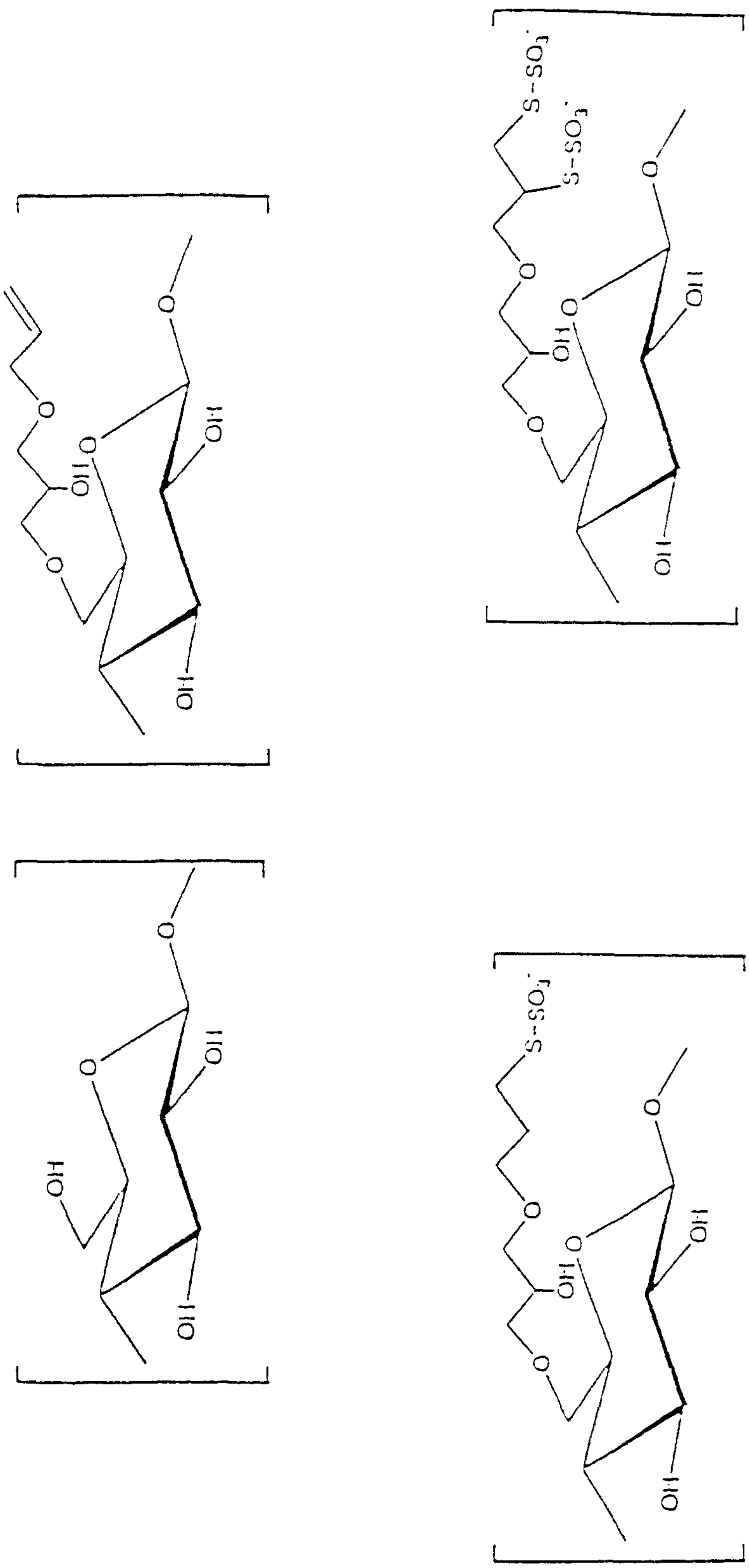

Fig. 1

Fig.2a 3-Allyloxy-2-hydroxylpropyl-cellulose ($^1H$-NMR Spektrum in $D_2O$)

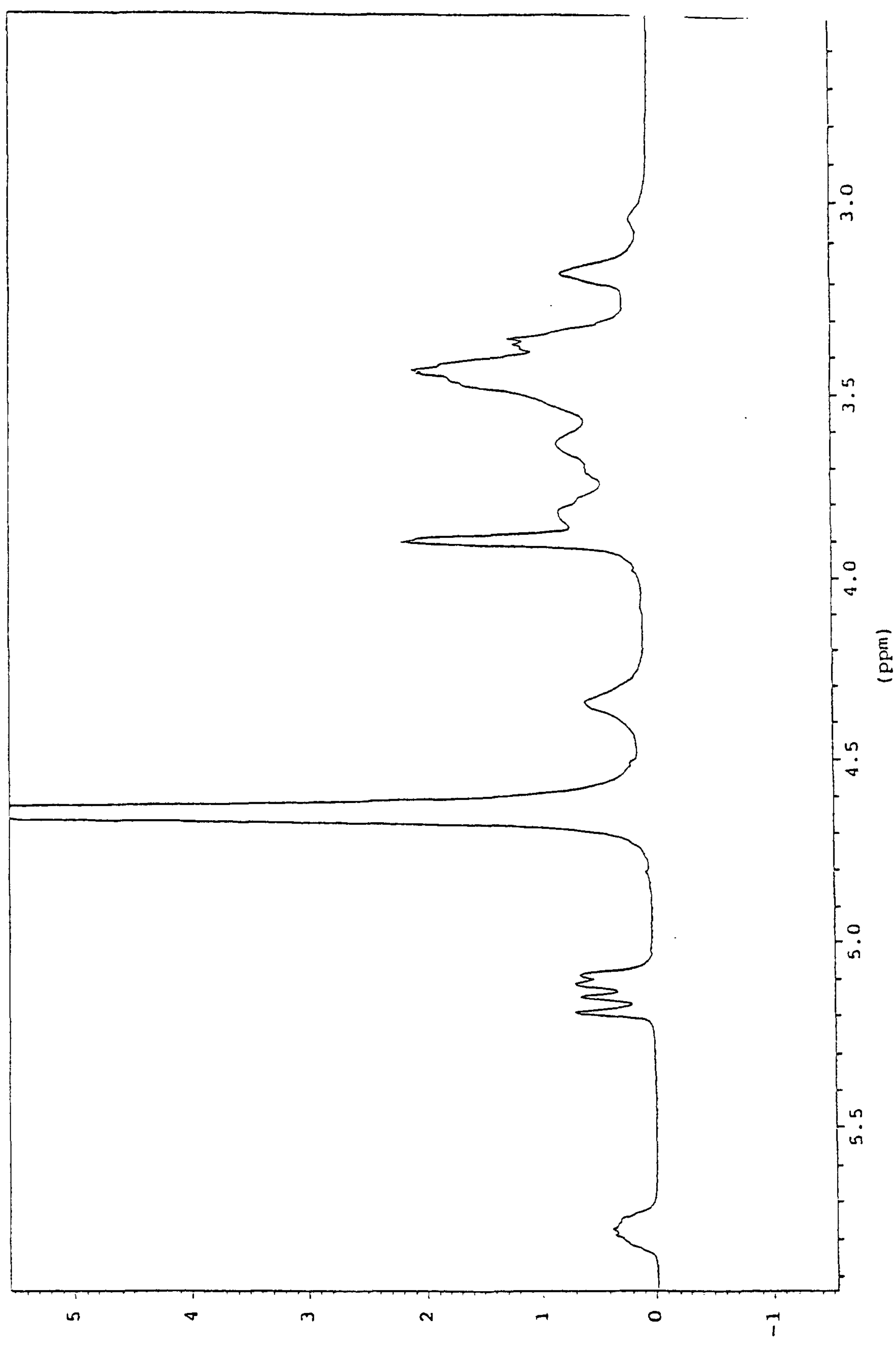

Fig.2b 3-Allyloxy-2-hydroxylpropyl-cellulose ($^{13}C$-DEPT-NMR Spektrum in DMSO)

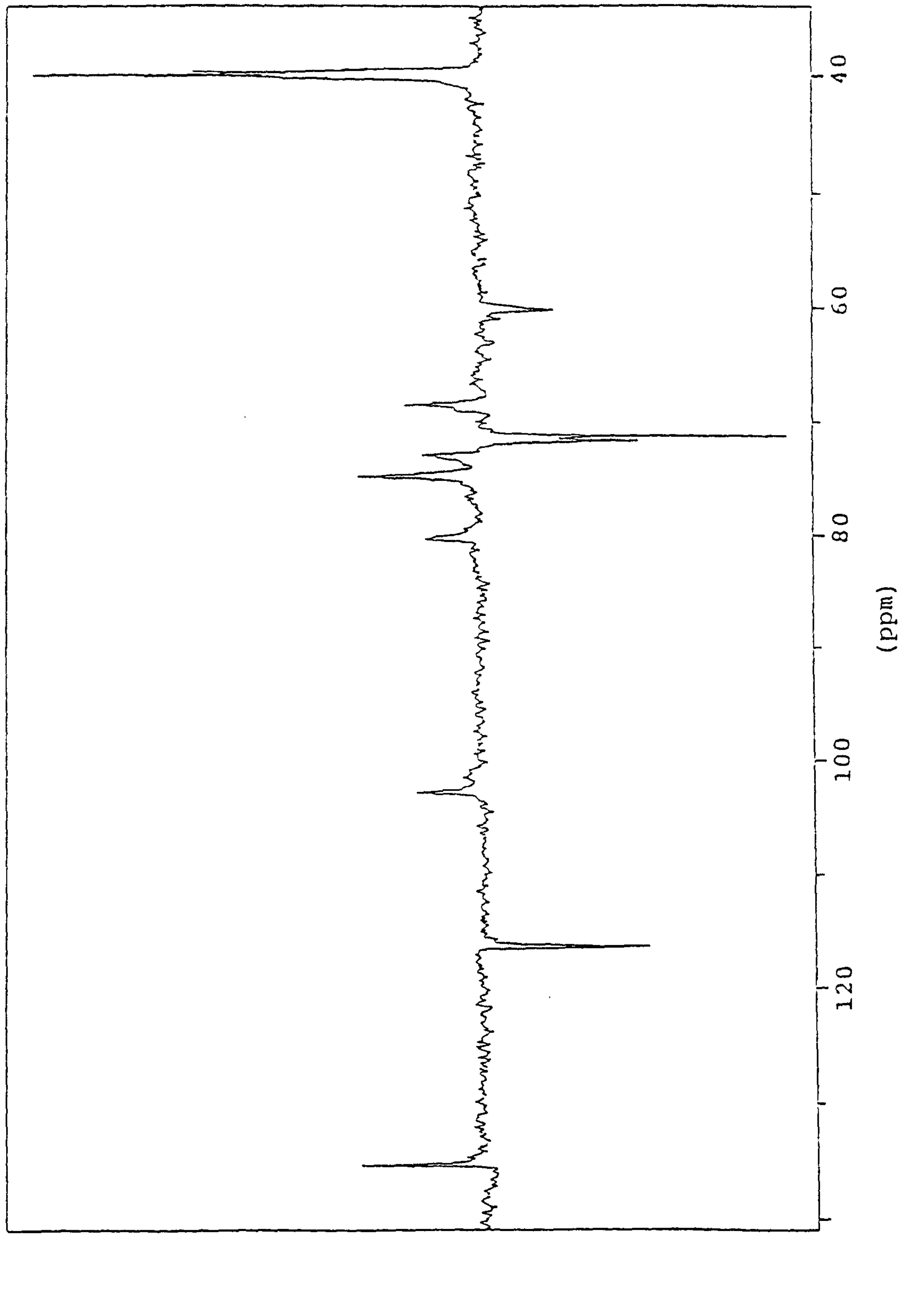

Fig.3a (3-Thiosulfatopropyl-oxy-2-hydroxypropyl)-cellulose ($^1H$-NMR Spektrum in $D_2O$)

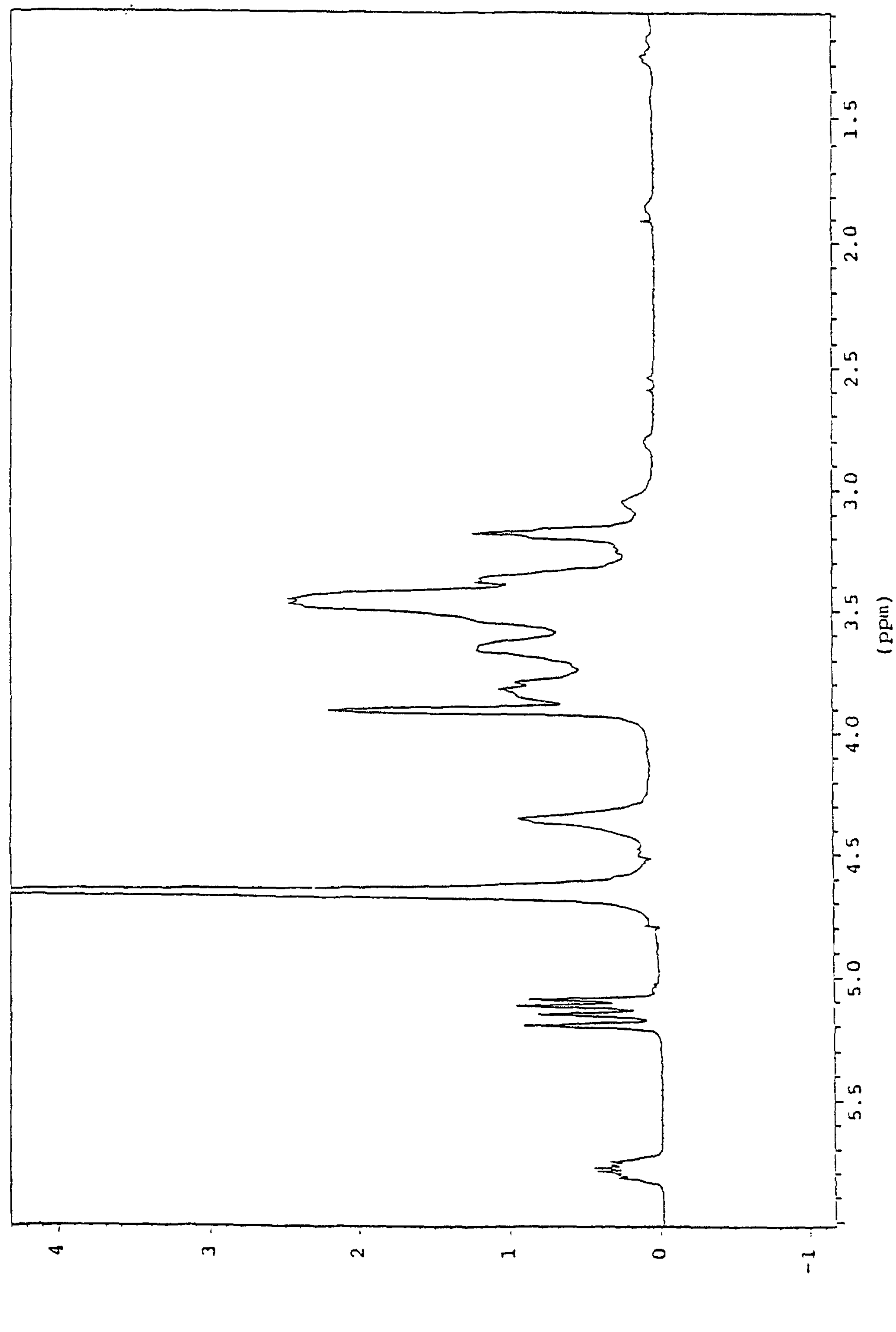

Fig.3b (3-Thiosulfatopropyl-oxy-2-hydroxypropyl)-cellulose ($^{13}C$-DEPT-NMR Spektrum in $D_2O$)

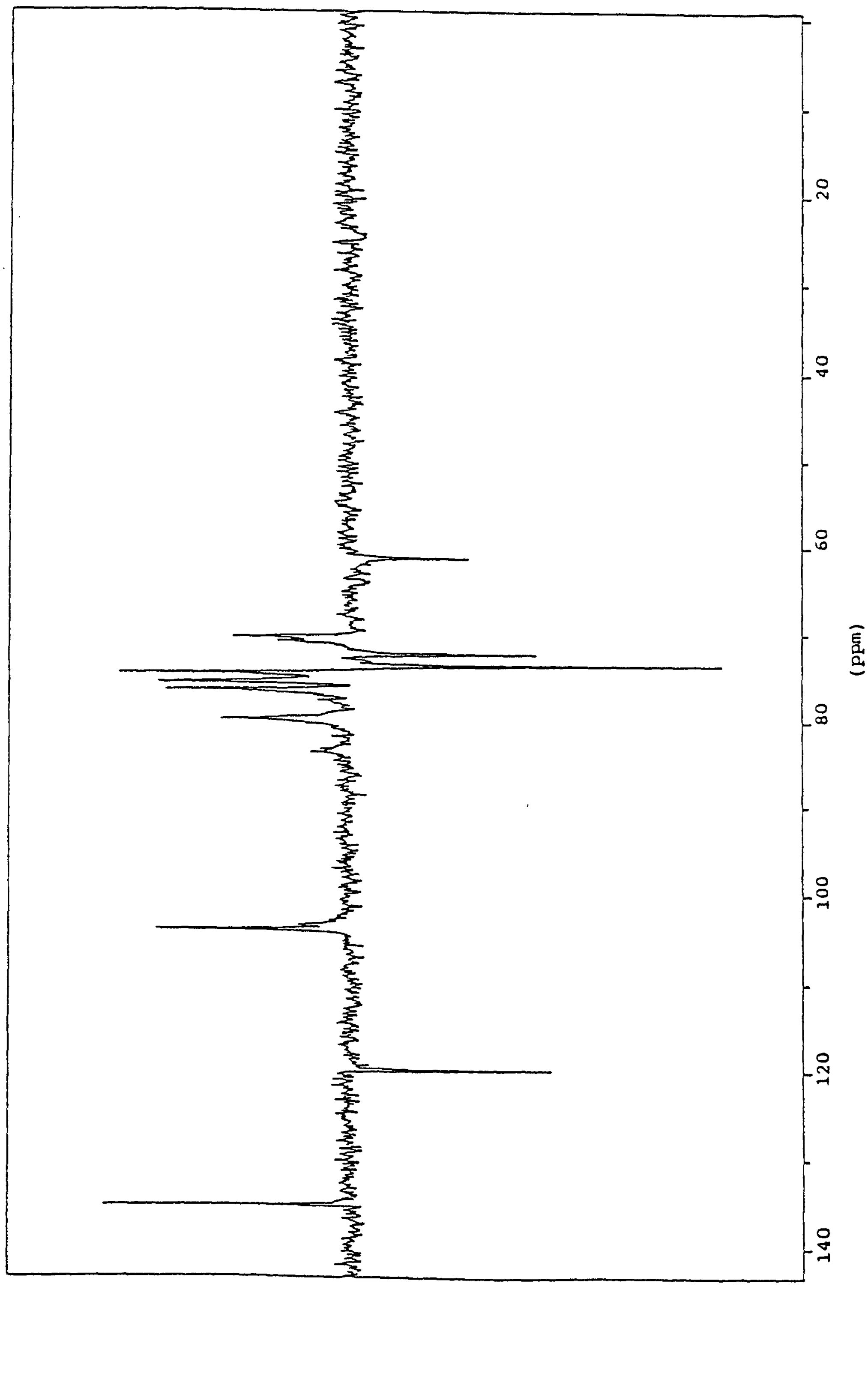

Fig. 4a

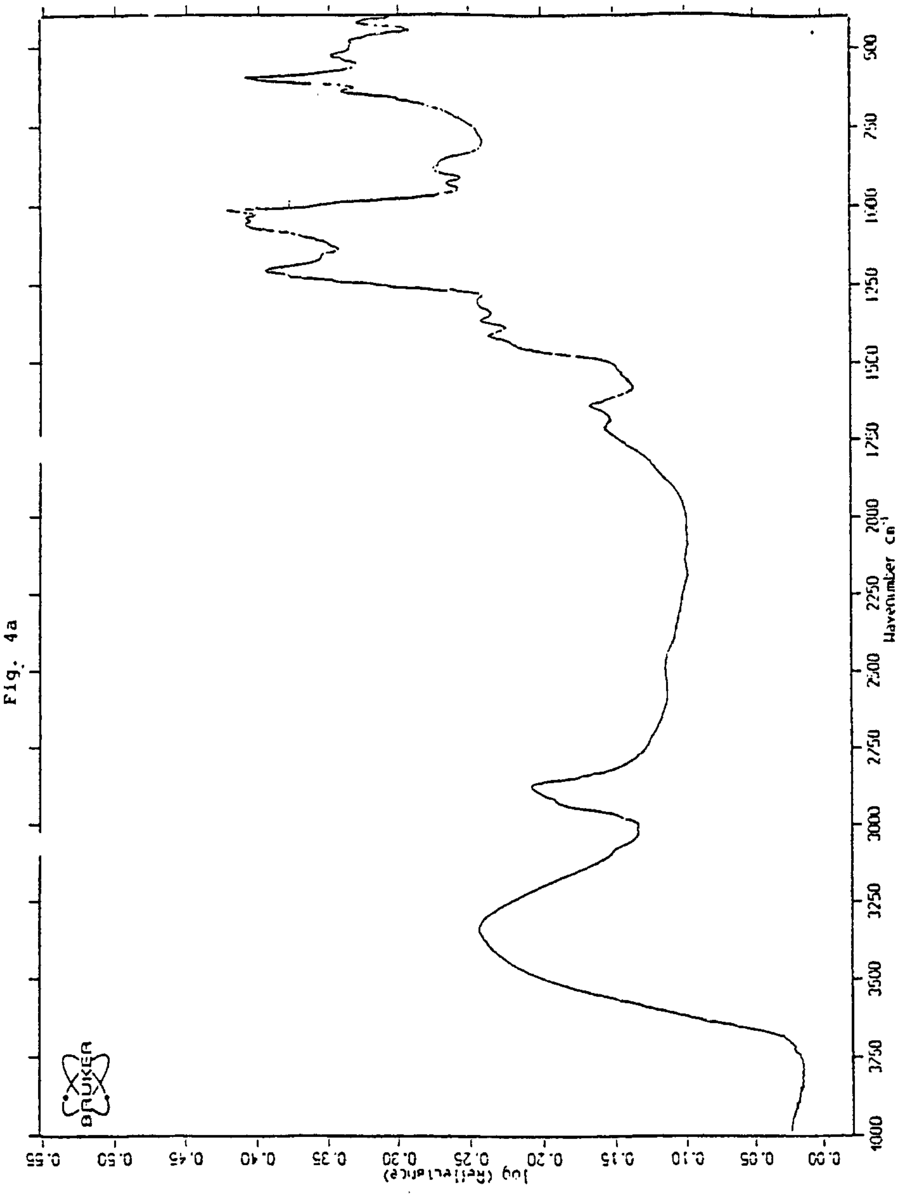
log (Reflectance)
0.55
0.50
0.45
0.40
0.35
0.30
0.25
0.20
0.15
0.10
0.05
0.00
Wavenumber cm-1
4000
3750
3500
3250
3000
2750
2500
2250
2000
1750
1500
1250
1000
750
500
BRUKER

Figur 4b

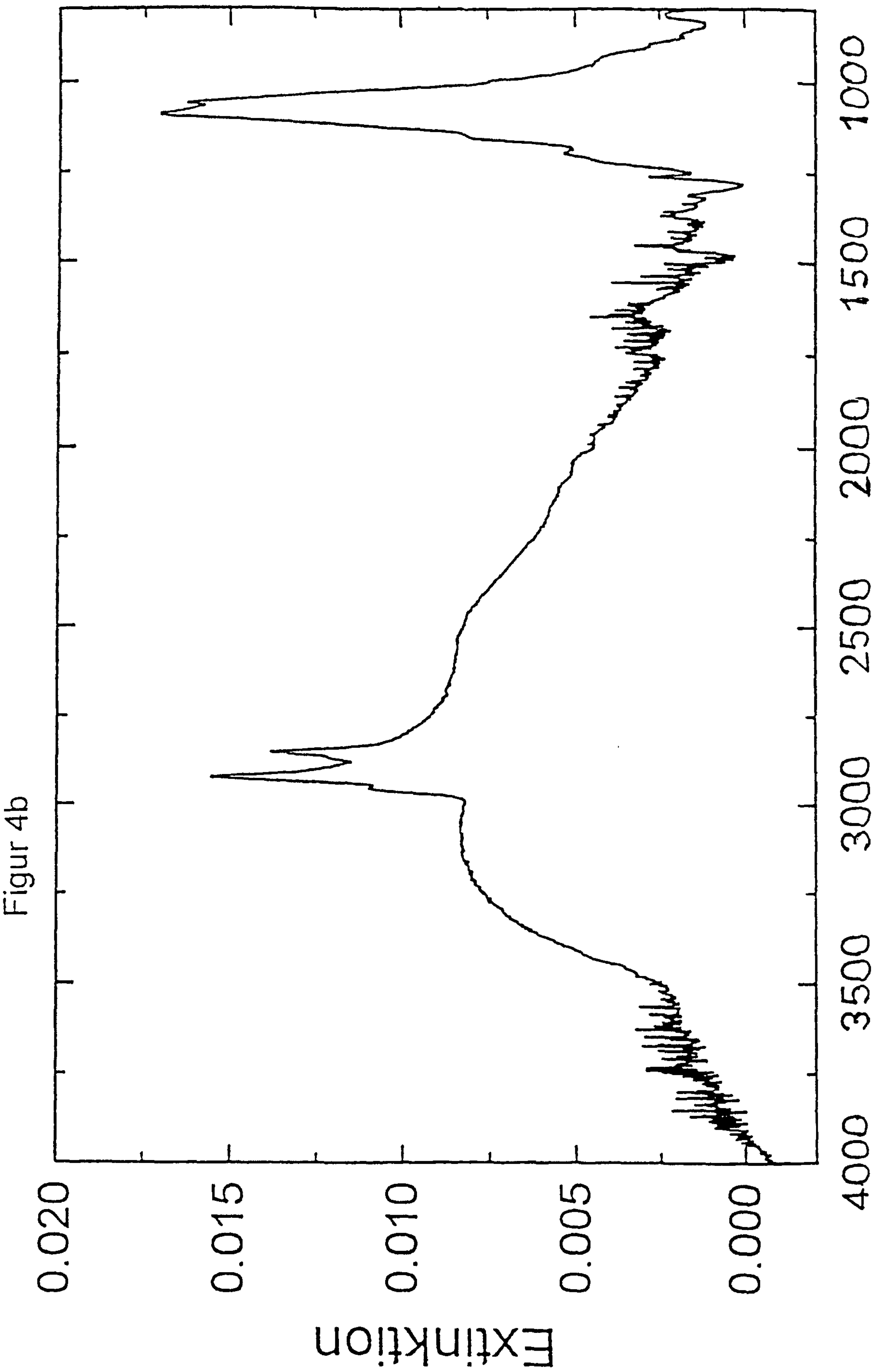
Extinktion
0.020
0.015
0.010
0.005
0.000
4000
3500
3000
2500
2000
1500
1000

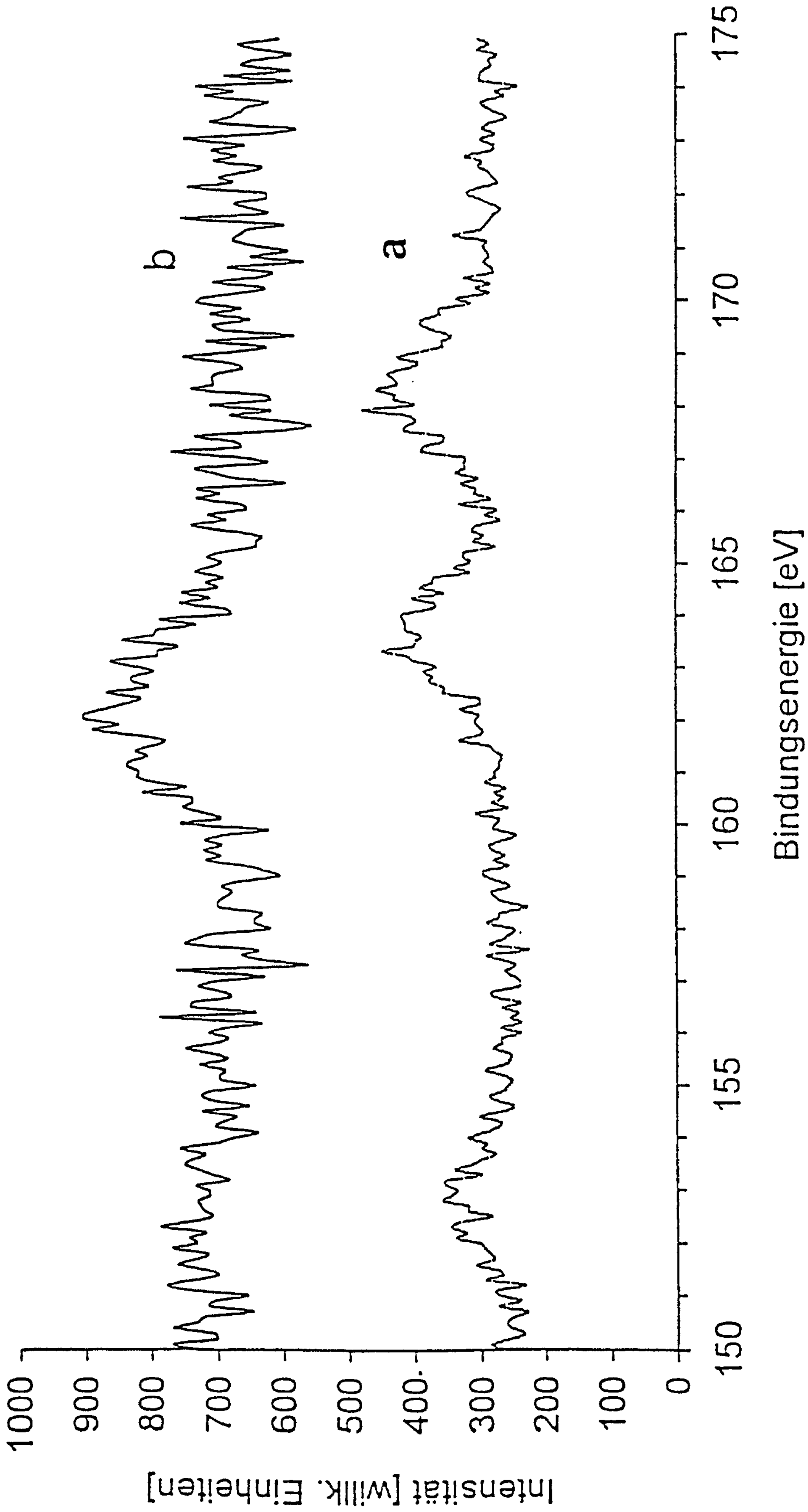
Intensität [willk. Einheiten]
1000
900
800
700
600
500
400.
300
200
100
0
150
155
160
165
170
175
Bindungsenergie [eV]
a
b

Figur 6

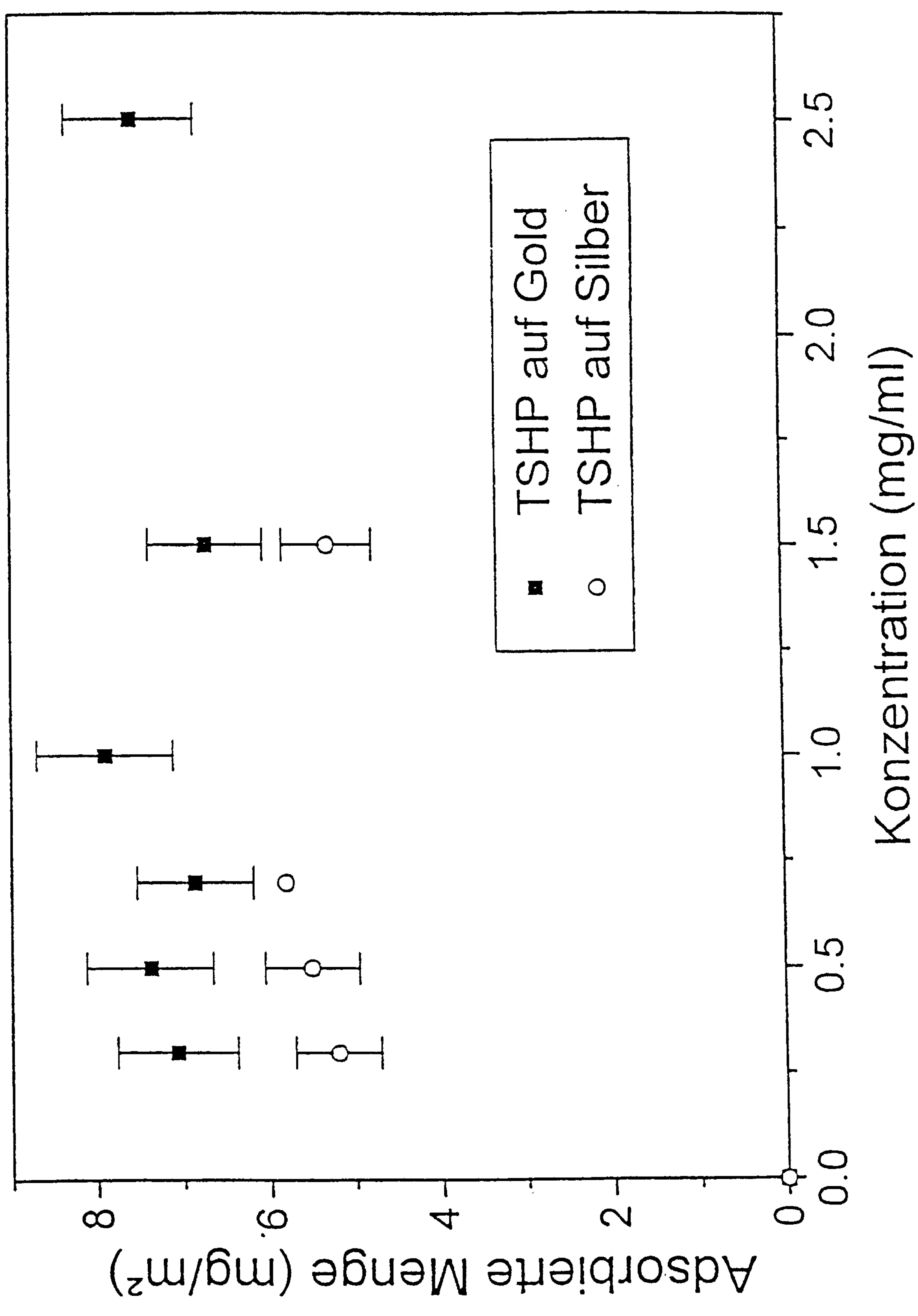
TSHP auf Gold
TSHP auf Silber
Konzentration (mg/ml)
Adsorbierte Menge (mg/m$^2$)
0.0
0.5
1.0
1.5
2.0
2.5
0
2
4
6
8